# EUROPÄISCHE PATENTSCHRIFT

(11) **EP 2 226 570 B1**
(45) Veröffentlichungstag und Bekanntmachung des Hinweises auf die Patenterteilung: **02.11.2016**
(21) Anmeldenummer: 10002270.6
(22) Anmeldetag: 05.03.2010
(51) Int. Cl.: F24D 3/16, F24D 3/12, F24F 5/00

(54) **Plattenelement für ein Deckenheizungs- und/oder Kühlungselement**
Board element for a ceiling heating and/or cooling element
Elément de plaques pour un élément de chauffage et/ou de refroidissement de couvercle

(30) Priorität: 05.03.2009 DE 202009003205 U
(43) Veröffentlichungstag der Anmeldung: 08.09.2010
(73) Patentinhaber: Zehnder Group International AG, 5722 Gränichen (CH)
(72) Erfinder: Weschle, Peter, 77743 Neuried (DE)
(74) Vertreter: Stenger Watzke Ring

(56) Entgegenhaltungen:
- EP-A1- 0 051 713
- EP-A1- 1 731 845
- EP-A2- 1 512 933
- WO-A1-2006/041418
- DE-A1- 19 844 617
- GB-A- 2 397 642

## Beschreibung

Die vorliegende Erfindung betrifft ein Plattenelement für ein Deckenheizungs- und/oder Kühlungselement, ein Deckenheizungs- und/oder Kühlungselement mit einem Plattenelement, eine Decke mit Deckenheizungs- und/oder Kühlungselementen sowie ein Verfahren zum Herstellen des Plattenelements.

Gattungsgemäße Plattenelemente sind aus dem Stand der Technik bekannt und werden für den Aufbau von Deckenheizungs- und/oder Kühlungselementen eingesetzt, die wiederum modulartig zu einer Decke zusammengefügt sein können. Ein gattungsgemäßes Plattenelement ist in der DE 201 11 852 U1 offenbart. Das hier gezeigte Plattenelement ist aus einem dünnwandigen Material hergestellt und weist eine Rohraufnahmestruktur in Form von Nuten auf, die durch Biegen eines dünnwandigen Materials gebildet sind. Zu Verstärkungszwecken sind zwischen benachbarten, parallel angeordneten Rohraufnahmenuten Sicken ausgebildet.

Ein weiteres gattungsgemäßes Plattenelement offenbart die DE 20 2005 009 254 U1. Das dort gezeigte Plattenelement besteht aus einem Rohrregister, welches in einer Schicht aus Graphit eingebettet ist. In der GB 2 397 642 A wird ein Plattenelement offenbart, welches aus verbundenen Aluminiumplatten gebildet ist, zwischen denen ein Rohr angeordnet ist. Das Rohr wird durch Aufpumpen eines zwischen den Aluminiumplatten flachgedrückten Rohrkörpers gebildet.

Obwohl sich die bekannten Plattenelemente im praktischen Einsatz bewährt haben, erweist sich die Wärmeübertragungsleistung als verbesserungsbedürftig.

Es ist daher die Aufgabe der Erfindung, ein Plattenelement der eingangs genannten Art dahingehend weiterzubilden, dass eine erhöhte Wärmeübertragungsleistung erreicht werden kann.

Als Lösung dieser Aufgabe wird mit der Erfindung vorrichtungsseitig ein Deckenheizungselement gemäß Anspruch 1 vorgeschlagen.

Das erfindungsgemäße Plattenelement zeichnet sich dadurch aus, dass das Rohr von den Wärmeleitplatten im wesentlichen vollständig, dass heißt, über dessen gesamten Umfang von den Wärmeleitplatten umgeben ist. Da das Rohr unter Materialverdrängung eingepresst worden ist, steht es in gutem thermischen Kontakt mit dem Werkstoff der Wärmeleitplatten, so dass eine hohe Wärmeübertragung erreicht werden kann. Gegenüber dem nachteiligen Aufpumpen des Rohrkörpers nach der GB 2 397 642 A führt die Materialverdrängung insbesondere im Bereich um das Rohr zu einer Verdichtung des Wärmeplattenwerkstoffs, wodurch die thermische Ankopplung weiter verbessert wird. Zugleich kann aufgrund der Anpassung der Wärmeleitplatte an das Rohr eine große Wärmeübertragungsfläche durch die Wärmeleitplatte bereitgestellt werden. Dadurch kann die von dem Rohr abgegebene Wärme gut von der Wärmeleitplatte aufgenommen beziehungsweise Wärme von der Wärmeleitplatte gut an das Rohr abgeben werden. Gegenüber dem dünnwandigen Material der DE 201 11 852 kann somit nicht nur die Wärmeleistung erhöht werden, sondern es können ferner geringere Temperaturgradienten an einer Oberfläche der Wärmeleitplatte erreicht werden. Insgesamt lässt sich eine bedeutende Verbesserung der thermischen Übertragungsleistung zwischen dem Rohr und einer mit der Wärmeleitplatte verbindbaren oder durch sie gebildeten Wärmeübergangsfläche erreichen. Die Wärmeleitplatte ist insbesondere aus einem hochwärmeleitenden, verformbaren Material, beispielsweise Graphit, vorzugsweise expandiertem Graphit, oder dergleichen gebildet. Dies erlaubt es, ein stabiles Plattenelement mit einer hohen Wärmeleistung beziehungsweise Kühlleistung erreichen zu können. Aufgrund einer hohen Wärmeübergangsleistung kann eine hohe thermische Reaktionsgeschwindigkeit des Plattenelements gegenüber den bekannten Plattenelementen erreicht werden.

Durch die Flächenpressung wird nicht nur ein Formverbund für das Plattenelement erreicht, sondern es werden im Wesentlichen plane Oberflächen gebildet, die mit weiteren flächigen Funktionselementen thermisch gut gekoppelt werden können. In vorteilhafter Weise überwindet somit das vorliegende Plattenelement die Nachteile der GB 2 397 642 A, nach der die Plattenoberfläche wenigstens einseitig uneben ist. Wegen der guten thermischen Ankopplung des Rohrs an die Wärmeleitplatte können nicht nur höhere Leistungen als beim Stand der Technik übertragen werden, sondern es kann darüber hinaus ein Rohrdurchmesser bei vorgegebener Leistung reduziert werden, sofern eine entsprechende Strömung des Wärmetransfermediums gewährleistet ist. Dies erlaubt es, die Dicke des Plattenelements sowie dessen Gewicht zu reduzieren.

Durch das Verpressen erhält das Plattenelement im Wesentlichen ebene beziehungsweise glatte äußere Flächen, die sich besonders gut für eine thermische Ankopplung an andere Bauteile oder dergleichen eignen. Eine der beiden Flächen kann dazu vorgesehen sein, Wärme an eine Raumluft abzugeben, wohingegen die andere Seite wärmeisoliert sein kann, so dass die Heiz- beziehungsweise Kühlwirkung auf den zu beheizenden beziehungsweise zu kühlenden Raum konzentriert werden kann. Im Unterschied zum Stand der Technik weist das Plattenelement der Erfindung somit keine Wellung auf, die durch Durchprägen der Nut in das dünnwandige Material gebildet ist. Das Rohr kann aus einem Metall wie Stahl, Kupfer, Aluminium oder dergleichen oder auch aus einem nicht metallischen Werkstoff wie Kunststoff, beispielsweise faserverstärkter Kunststoff oder dergleichen gebildet sein. Vorzugsweise ist der Werkstoff des Rohrs an den Werkstoff der Wärmeleitplatte derart angepasst, dass eine einfache Verbindung zwischen dem Rohr und der Wärmeleitplatte hergestellt werden kann. Das Plattenelement ist vorzugsweise quaderförmig ausgebildet, es kann daneben jedoch auch jede beliebige andere Raumform annehmen.

Im Unterschied zu einer einzigen Schicht, in die ein Rohrregister eingebettet ist, welche die DE 20 2005 009 254 U1 beschreibt, sind gemäß der erfindungsgemäßen Ausgestaltung zwei Wärmeleitplatten vorgesehen, die miteinander thermisch gekoppelt sind, beispielsweise indem die beiden Wärmeleitplatten unter Druck derart verformt werden, dass sie das Rohr vollständig umschließen und sie sich darüber hinaus in Bereichen außerhalb des Rohrs zumindest teilweise kontaktieren, so dass zwischen den Wärmeleitplatten selbst ein Wärmeübergang stattfinden kann. Vorzugsweise sind die Wärmeleitplatten und das Rohr zu einem Verbund verpresst, so dass ein handhabbares Bauteil gebildet ist. Die erste und die zweite Wärmeleitplatte sind vorzugsweise aus dem gleichen Werkstoff gebildet. Es kann aber auch vorgesehen sein, dass die erste und die zweite Wärmeleitplatte aus unterschiedlichen Werkstoffen bestehen, beispielsweise eine Wärmeleitplatte aus Aluminium und die andere Wärmeleitplatte aus Graphit. Das Wärmetransfermedium kann durch Wasser, Öl, einem Gas und/oder anderen fluiden Stoffen sowie Stoffmischungen gebildet sein.

Das Rohr kann mäanderförmig ausgebildet sein. Dies erlaubt es, die Wärmeübergangsfläche zwischen Rohr und Wärmeleitplatte weiter zu vergrößern, wodurch eine bessere thermische Ankopplung sowie gegebenenfalls ein geringerer Temperaturgradient innerhalb der Wärmeleitplatte erreicht werden kann.

Das Rohr kann auch als Rohrregister ausgebildet sein, welches parallel geführte Rohre aufweist. Enden der parallel geführten Rohre können an gemeinsamen Sammelrohren angeschlossen sein. Dies ermöglicht es, Rohre parallel mit dem Wärmetransfermedium zu beaufschlagen, so dass ein Temperaturgradient innerhalb der Wärmeleitplatte weiter reduziert werden kann. Die Rohrenden können beispielsweise seitlich aus dem Plattenelement herausragen.

Insgesamt erlaubt es die Erfindung, Materialkosten und Gewicht einzusparen. Dies ist insbesondere auch deshalb von Vorteil, weil das Plattenelement der Erfindung in Deckenkonstruktionen eingearbeitet wird, bei denen die Frage des Gewichts von Bedeutung ist. Darüber hinaus erlaubt das geringe Gewicht aber auch ein einfaches Montieren des Plattenelements in der Deckenkonstruktion. Zusätzliche Maßnahmen, insbesondere stabilitätserhöhende Maßnahmen können eingespart werden.

Mit der Erfindung wird ferner ein Deckenheizungs- und/oder Kühlungselement mit einem Plattenelement der Erfindung vorgeschlagen, welches Deckenheizungs- und/oder Kühlungselement ein Wärmeübergangselement aufweist, welches Wärmeübergangselement mit dem Plattenelement wärmetechnisch gekoppelt ist. Das Wärmeübergangselement stellt vorzugsweise die wärmetechnische Ankopplung der Wärmeleitplatte an den zu beheizenden Raum dar. Das Wärmeübergangselement kann aus Metall gebildet sein, beispielsweise einer Metallplatte, die mit der Wärmleitplatte, insbesondere flächig verbunden ist, um eine gute thermische Ankopplung zu erreichen. Das Wärmeübergangselement kann mittels Gravitation, beispielsweise durch Auflegen der Wärmeleitplatte auf das Wärmeübergangselement, durch Verpressen, durch Klemmen und/oder durch Verkleben mit dem Plattenelement verbunden sein. So kann beispielsweise vorgesehen sein, dass das Wärmeübergangselement eine Rippen-, Loch- und/oder Noppenstruktur aufweist, mit der eine Übergangsfläche des Wärmeübergangselements zur Raumluft erhöht werden kann. Insbesondere kommen raumseitig angeordnete Stege oder dergleichen in Betracht. Das Wärmeübergangselement kann auch derart ausgebildet sein, dass eine gute Abstrahlung und/oder Absorption von Wärmestrahlung erreichbar ist. Hierfür kann das Wärmeübergangselement an seiner raumseitigen Oberfläche von dunkler Farbe sein, beispielsweise dunkelgrau, schwarz, aber auch andere Farben wie dunkelblau, dunkelrot oder dergleichen. Darüber hinaus kann das Wärmeübergangselement auch aus einem nicht metallischen Werkstoff gebildet sein, insbesondere solchen Werkstoffen, die üblicherweise bei abgehängten Decken verwendet werden, wie Gipskarton, Holz, Glas, Kunststoff, Putz oder dergleichen. Vorzugsweise werden Werkstoffe ausgewählt, die eine gute spezifische Wärmeleitfähigkeit aufweisen.

Die Verbindung zwischen der Wärmeleitplatte und dem Wärmeübergangselement kann sowohl herstellerseitig als auch bei der Montage auf der Baustelle erfolgen. Letzteres ermöglicht es, bereits installierte Deckenelemente beziehungsweise Deckenflächen nachträglich mit dem Deckenheizungs- und/oder Kühlungselement auszurüsten.

Eine vorteilhafte Weiterbildung sieht vor, dass das Wärmeübergangselement zumindest teilweise antibakteriell beschichtet ist. Dies reduziert das Auftreten von Keimen, die über die Konvektion mit der Raumluft verbreitet werden können. Insbesondere bei einem Kühlbetrieb wirkt sich dies als vorteilhaft aus, da üblicherweise beim Kühlen von Raumluft Feuchtigkeit anfällt, die zu einem von Keimen bevorzugten, lokal feuchten Klima führen kann.

Darüber hinaus kann das Wärmeübergangselement ein schallabsorbierendes Material aufweisen. Dieses kann beispielsweise durch eine Beschichtung mit einem schallabsorbierenden Kunststoff, Putz oder dergleichen gebildet sein. Natürlich können auch Ausformungen des Wärmeübergangselements vorgesehen sein, die den auftreffenden Schall umlenken und über mehrfache Umlenkung dessen Energie dissipieren.

Das Deckenheizungs- und/oder Kühlungselement kann ferner Versteifungsmittel aufweisen. Die Versteifungsmittel können durch Versteifungs- und/oder Aufhängeprofile gebildet sein. Vorzugsweise sind die Versteifungsmittel mit dem Wärmeübergangselement verbunden, beispielsweise durch Verschrauben, Nieten, Kleben oder dergleichen. Das Profil kann aus Metall oder auch aus einem Kunststoff, insbesondere einem Faserverbundwerkstoff gebildet sein. Das Versteifungsmittel kann darüber hinaus durch eine Sicke gebildet sein, die am Wärmeübergangselement vorgesehen ist.

Ferner kann das Deckenheizungs- und/oder Kühlungselement ein Aufhängungsmittel aufweisen. Das Aufhängungsmittel kann mit dem Versteifungsmittel einstückig ausgebildet sein. Das Aufhängungsmittel kann ebenfalls durch ein Profil gebildet sein. Vorzugsweise ist das Aufhängungsmittel mit dem Wärmeübergangselement verbunden und dient zur unmittelbaren beziehungsweise mittelbaren Verbindung des Deckenheizungs- und/oder Kühlungselements mit der Decke. Das Aufhängungsmittel kann mit dem Wärmeübergangselement beispielsweise durch Verschrauben, Nieten, Verkleben oder dergleichen verbunden sein. Das Aufhängungsmittel kann Haken, Befestigungsringe, Bohrungen und/oder dergleichen aufweisen, die eine Verbindung des Deckenheizungs- und/oder Kühlungselements mit der Decke zum Beispiel mittels Verbindungsstreben oder ähnlichem ermöglichen.

Eine vorteilhafte Weiterbildung sieht vor, dass das Wärmeübergangselement mit dem Plattenelement einstückig ausgebildet ist. Vorzugsweise bildet eine raumseitige Oberfläche der Wärmeleitplatte zugleich das Wärmeübergangselement. Durch geeignete Maßnahmen der Oberfläche des Wärmeübergangselements kann der Wärmeübergang verbessert werden. Beispielsweise können Oberflächenvergrößerungen in Form von Noppen, Vertiefungen, Sacklöchern, Nuten oder dergleichen in die Oberfläche eingeprägt sein. Darüber hinaus kann die Oberfläche zugleich schallabsorbierend ausgebildet sein. Auf der Oberfläche kann ferner eine Beschichtung aufgebracht sein, die eine Schallabsorption, eine antibakterielle Wirkung oder dergleichen hat.

Es wird ferner vorgeschlagen, dass das Rohrende mechanisch fixiert ist. Hierdurch können mechanische Beanspruchungen der Rohrenden abgefangen werden, so dass eine Übertragung einer Beanspruchung auf die Wärmeleitplatte weitgehend vermieden werden kann. Hierfür sind am Deckenheizungs- und/oder Kühlungselement spezielle Elemente, beispielsweise in Form von Laschen vorgesehen, die eine Bohrung aufweisen, durch die jeweils ein Rohrende geführt ist. Die Laschen können mit dem Versteifungsmittel und/oder dem Aufhängungsmittel verbunden sein oder auch einstückig mit diesen ausgebildet sein. Vorzugsweise weist das Deckenheizungs- und/oder Kühlungselement einen Anschlussraum auf, in den die Rohrenden geführt sind. Im beziehungsweise benachbart zum Anschlussraum können ferner Sammelrohre angeordnet sein, an die die Rohrenden angeschlossen sind. Der Anschlussraum kann an einem Endbereich des Deckenheizungs- und/oder Kühlungselements angeordnet sein. Vorzugsweise ist der Anschlussraum derart ausgebildet, dass die Anschlussräume benachbarter Deckenheizungs- und/oder Kühlungselemente benachbart zueinander angeordnet sind, so dass ein einfacher Anschluss mit kurzen Verbindungen erreicht werden kann.

Gemäß einer weiteren Ausgestaltung ist das Deckenheizungs- und/oder Kühlungselement zumindest teilweise elektrisch leitfähig. Hierdurch kann das Deckenelement als Schirm gegen elektromagnetische Strahlung dienen. Es kann vorgesehen sein, dass die Wärmeleitplatte aus einem elektrisch leitfähigen Werkstoff gebildet ist. Vorzugsweise ist das Deckenheizungs- und/oder Kühlungselement geerdet. Strahlungseinwirkungen, beispielsweise durch Einstrahlung von Mobilfunksendeantennen, können reduziert werden. Die elektrische Leitfähigkeit kann durch die Wärmeleitplatte gebildet sein. Das Plattenelement kann hierfür aber auch mit einer elektrisch leitfähigen Schicht versehen sein, zum Beispiel eine Metallschicht oder dergleichen.

Das Deckenheizungs- und/oder Kühlungselement kann darüber hinaus auch für eine Wand- und/oder Standmontage ausgebildet sein. So kann das Deckenheizungs- und/oder Kühlungselement beispielsweise mit einem Standfuß oder Sockel versehen sein, der es erlaubt, das Deckenheizungs- und/oder Kühlungselement auf einer Auflage, einem Fußboden oder dergleichen aufzustellen. Vorzugsweise sind durch den Standfuß oder Sockel zugleich Anschlüsse für das Rohr geführt, so dass separate Rohranschlüsse entfallen können. Bei einer Wandmontage können beispielsweise eine Aufhängung sowie ein Anschluss wie bei einer konventionellen Raumheizung vorgesehen sein.

Zum Verbinden des Deckenheizungs- und/oder Kühlungselements mit einer Decke eines Raums können Befestigungsmittel vorgesehen sein, die vorzugsweise Bestandteil des Aufhängungsmittels sind. Die Befestigungsmittel können beispielsweise durch am Deckenheizungs- und/oder Kühlungselement flexibel positionierbare, selbstsichernde Klemmstücke gebildet sein. Insbesondere können die Klemmstücke vor Ort auf seitliche Abkantungen des Deckenheizungs- und/oder Kühlungselement aufgesteckt werden. Dies erlaubt eine einfache und flexible Montage des Deckenheizungs- und/oder Kühlungselements an einer Decke.

Mit der Erfindung wird ferner eine Decke mit Deckenheizungs- und/oder Kühlungselementen der Erfindung vorgeschlagen, die Verbindungsschienen aufweist, mit denen die Deckenheizungs- und/oder Kühlungselemente zu einem Deckenfeld modular verbunden sind. Dies erlaubt es, einerseits die Deckenheizungs- und/oder Kühlungselemente hinsichtlich ihrer geometrischen Abmessungen und ihrem Gewicht für Transport und Montage zweckmäßig, insbesondere kompakt auszubilden und andererseits zugleich in flexibler Weise Decken mit den Deckenheizungs- und/oder Kühlungselementen zu versehen. Der modulare Aufbau erlaubt es darüber hinaus, für die Deckenheizungs- und/oder Kühlungselemente vorgebbare Rastermaße vorzusehen, mit denen eine Vielzahl von unterschiedlichen Decken gebildet werden können. Dies reduziert Lagerhaltung und Herstellungsaufwand. Es können ferner Verbindungsschienen vorgesehen sein, mit denen die einzelnen Deckenheizungs- und/oder Kühlungselemente zu einer Decke zusammengefügt werden können. Dabei kann vorgesehen sein, dass die einzelnen Rohrenden der Deckenheizungs- und/oder Kühlungselemente fluidtechnisch mittels flexibler Schläuche verbunden sind. Die Deckenheizungs- und/oder Kühlungselemente können fluidtechnisch seriell, parallel oder auch in Matrixanordnung miteinander verbunden sein.

Weiterhin kann vorgesehen sein, dass das Deckenfeld eine Aussparung aufweist. Dies erlaubt es, zusätzliche Funktionselemente in die Decke zu integrieren, beispielsweise Luftauslässe, Leuchten, Sensoren, Alarmgeräte und/oder dergleichen. Die Flexibilität der Ausgestaltung einer Decke kann weiter erhöht werden.

Mit der Erfindung wird ferner ein Verfahren zum Herstellen eines erfindungsgemäßen Plattenelements für ein Deckenheizungs- und/oder Kühlungselement vorgeschlagen, welches Plattenelement ein von einem Wärmetransfermedium durchströmtes Rohr aufweist, wobei das Rohr auf eine erste im wesentlichen ebene Wärmeleitplatte aufgelegt wird, auf das Rohr eine zweite im wesentlichen ebene Wärmeleitplatte aufgelegt wird und die Wärmeleitplatten und das Rohr mittels Pressen zum Plattenelement umgeformt werden. Dies erlaubt es, auf einfache Weise mit wenigen einfachen Verfahrensschritten ein Plattenelement der Erfindung herzustellen. Vorzugsweise weist die Wärmeleitplatte einen hochwärmeleitenden, verformbaren Werkstoff auf, beispielsweise Graphit oder dergleichen. Durch Flächenpressung erfolgt das Fügen des Rohrs mit der Wärmeleitplatte. Da die Wärmeleitplatte unter Druck verformbar ist, kann ein im Wesentlichen vollständiges, Umschließen (360°) des Rohres durch den Werkstoff der Wärmleitplatte erreicht werden. Hierdurch wird eine gute thermische Ankopplung des Rohres an die Wärmeleitplatte erreicht.

Durch den Verbund ist das Rohr durch die Wärmeleitplatte vor äußeren Einwirkungen geschützt. Besonders vorteilhaft erweist es sich, wenn durch die Verpressung zugleich ein Verbinden der beiden Wärmeleitplatten zu einem einstückigen Element erreicht werden kann. Hierfür kann der Pressdruck geeignet gewählt werden, so dass eine vorzugsweise stoffschlüssige Verbindung der beiden Wärmeleitplatten erfolgt. Ferner kann erreicht werden, dass die auf diese Weise gebildete Wärmeleitplatte im Wesentlichen ebene glatte äußere Oberflächen aufweist.

Vorzugsweise werden die Wärmeleitplatten durch das Verpressen miteinander verbunden. Für die Verbindung kann aber auch vorgesehen sein, dass Verbindungsmittel, beispielsweise Kleber oder dergleichen auf einer oder beiden der zueinander zugewandten Oberflächen der Wärmeleitplatten aufgebracht werden.

Die Wärmeleitplatte, das Plattenelement und/oder das Deckenheizungs- und/oder Kühlungselement kann auf einer raumabgewandten Oberfläche mit einer Wärmeisolation versehen sein. Die Wärmeisolation kann durch eine Schicht aus einem Werkstoff mit einer schlechten Wärmeleitfähigkeit gebildet sein, beispielsweise aufgeschäumtes Polystyrol, Mineralfaserplatten oder dergleichen. Die Wärmeisolation kann mit der Wärmeleitplatte, dem Plattenelement und/oder dem Deckenheizungselement und/oder Kühlungselement verbunden sein, beispielsweise mittels Kleben, Nieten, Klemmen oder dergleichen. Die Wärmeisolation kann beispielsweise einseitig auf dem Deckenheizungs- und/oder Kühlungselement aufgelegt sein.

Gemäß einer Weiterbildung kann die Wärmeleitplatte mit einem Wärmeübergangselement verbunden werden. Die Verbindung kann mittels Klemmen, Kleben oder dergleichen erfolgen.

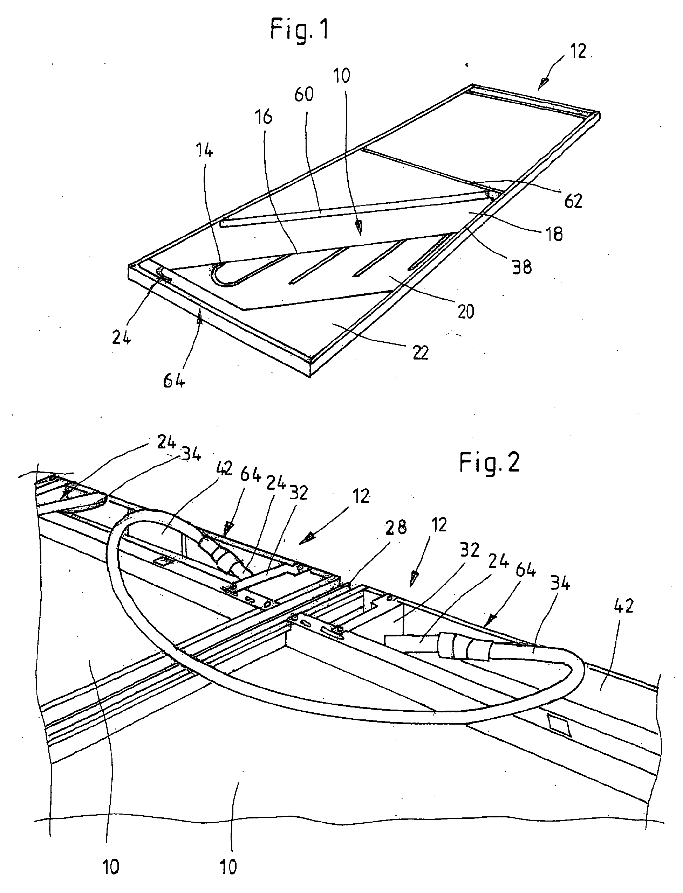

Weitere Vorteile und Merkmale sind der folgenden Beschreibung eines Ausführungsbeispiels zu entnehmen. Im Wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel gemäß Fig. 1 verwiesen. Die Zeichnungen sind Schemazeichnungen und dienen lediglich der Erläuterung des folgenden Ausführungsbeispiels. Es zeigen:
- Fig. 1: ein Plattenelement der Erfindung in einer teilweise aufgeschnittenen, perspektivischen Ansicht,
- Fig. 2: eine vergrößerte perspektivische Ansicht einer Verbindungsstelle zweier benachbarter Deckenheizungs- und Kühlungselemente mit einem Plattenelement nach Fig. 1,
- Fig. 3: das Deckenheizungs- und Kühlungselement der Erfindung in perspektivischer Darstellung mit Aufhängungsmitteln,
- Fig. 4: eine vergrößerte Darstellung des Bereichs IV in Fig. 3,
- Fig. 5: eine Darstellung eines weiteren Verbindungsbereichs zwischen zwei benachbarten Deckenheizungs- und Kühlungselementen der Erfindung,
- Fig. 6: ein Deckenfeld gebildet aus Deckenheizungs- und Kühlungselementen gemäß Fig. 1,
- Fig. 7: einen Anschlussbereich in perspektivischer Darstellung für zwei benachbart angeordnete Deckenheizungs- und Kühlungselemente gemäß Fig. 1 und
- Fig. 8: ein weiteres Deckenfeld mit Deckenheizungs- und Kühlungselementen gemäß der Erfindung sowie einer Aussparung.

Fig. 1 zeigt in perspektivischer Darstellung ein teilweise aufgeschnittenes Plattenelement 10 der Erfindung, welches in einem Rahmen 42 eines Deckenheizungs- und Kühlungselements 12 angeordnet ist. Aus Fig. 1 ist ersichtlich, dass das Plattenelement 10 ein Rohrregister 14 mit einem mäanderförmig ausgebildeten Rohr aufweist, welches zwischen zwei Wärmeleitplatten 18, 20 eingepresst ist, die einstückig miteinander verbunden sind. Hierfür wird das Rohrregister 14 zwischen zwei Wärmeleitplatten 18, 20 angeordnet und flächig verpresst, so dass unter Materialverdrängung der Wärmeleitplaten 18, 20 eine Längsnut 16 zur Aufnahme des Rohrregisters 14 gebildet wird und zugleich die beiden Wärmeplatten 18, 20 zu einem einzigen Bauteil verbunden werden. Hierdurch wird eine gute thermische Kopplung des Rohrregisters 14 an die Wärmeleitplatten 18, 20 erreicht. Durch das Verpressen sind die beiden Wärmeleitplatten 18, 20 miteinander stoffschlüssig verbunden. Das Rohrregister 14 ist vorliegend aus Edelstahl oder Kupfer gebildet. Die Wärmeleitplatten 18, 20 sind aus einem Graphitwerkstoff gebildet. Sowohl das Plattenelement 10 als auch das Deckenheizungs- und Kühlungselement 12 weisen vorliegend eine im Wesentlichen rechteckförmige Grundfläche auf. Eine Dicke des Deckenheizungs- und Kühlungselements 12 entspricht etwa der Summe der Dicken des Plattenelements 10, des Blechs 22 und einer deckenseitig an dem Deckenheizungs- und Kühlungselement 12 auf dem Plattenelement 10 aufgelegten Wärmeisolation 60.

In der Fig. 1 ist die Deckenseite des Deckenheizungs- und Kühlungselements 12 dargestellt. Die Raumseite des Deckenheizungs- und Kühlungselements 12 ist durch ein Blech 22 gebildet, dessen untere Oberfläche eine Kontaktfläche zur Raumluft bildet.

Aus Fig. 1 ist ersichtlich, dass Rohrenden 24 des Rohrregisters 14 seitlich aus dem Plattenelement 10 herausragen, so dass sie für einen Anschluss an ein Wärmetransfermittelsystem bereitstehen. Vorliegend ist das Plattenelement 10 in Längsrichtung kürzer als das Deckenheizungs- und Kühlungselement 12, so dass an einem Ende ein Anschlussraum 64 gebildet ist, in den die Rohrenden 24 geführt sind. Durch den Anschlussraum 64 kann eine Vereinfachung des Anschlusses der Rohrenden 24 des Rohrregisters 14 erreicht werden.

Die deckenseitig auf das Plattenelement 10 aufgebrachte Wärmeisolation 60 ist vorliegend mit der Wärmeleitplatte 18 verklebt. Gegebenenfalls kann die Wärmeisolation 60 auf die Wärmeleitplatte 18 lose aufgelegt sein. Die Wärmeisolation 60 besteht in dieser Ausgestaltung aus einem Mineralfaserdämmstoff in Plattenform. Die Wärmeisolation kann aber auch aus anderen geeigneten Materialien gebildet sein, beispielsweise aufgeschäumtes Polystyrol oder dergleichen. Gegenüberliegend ist die Wärmeleitplatte 20 mit ihrer Unterseite mit dem Blech 22 als Wärmeübergangselement verbunden. Vorliegend ist vorgesehen, dass das Plattenelement 10 lediglich auf das Blech 22 aufgelegt ist. Auch ein Verkleben kann vorgesehen sein. Das Blech 22 stellt eine thermische Verbindung zum Raum her, über die der Wärmeaustausch zwischen dem Raum und dem Plattenelement 10 erfolgt.

Das Plattenelement 10, die Wärmeisolation 60 sowie das Blech 22 sind durch den Rahmen 42 zu einem Bauteil, nämlich dem Deckenheizungs- und Kühlungselement 12 verbunden. Hierzu ist der Rahmen 42 aus nicht bezeichneten Profilen gebildet. Diese bestehen vorliegend aus einem Stahl. Darüber hinaus können auch andere Werkstoffe für die Profile zum Einsatz kommen, beispielsweise Aluminium, Legierungen hiervon, Kunststoffe, insbesondere faserverstärkte Kunststoffe oder dergleichen. Die Profile weisen raumseitig einen nicht näher dargestellten Vorsprung auf, der das Blech 22 mit dem Rahmen verbindet. Auf das Blech 22 ist das Plattenelement 10 aufgelegt, gegebenenfalls auch verklebt. Alternativ können der Rahmen 42 und das Blech 22 auch einstückig ausgebildet sein. Es liegt in diesem Fall eine Art Metallkassette vor, die eine ebene Blechfläche sowie einen Rahmenbereich aufweist.

Deckenseitig ist auf dem Plattenelement 10 die Wärmeisolation 60 aufgeklebt. Durch ein mit dem Rahmen 42 verschraubtes Versteifungsprofil 62 sind zugleich die einzelnen Elemente des Deckenheizungs- und Kühlungselements 12 zu einem Bauteil miteinander verbunden.

Zur Erhöhung der Stabilität weist der Rahmen 42 Abkantungen 38 auf. Darüber hinaus ist etwa mittig der Erstreckung des Deckenheizungs- und Kühlungselements 12 das Versteifungsprofil 62 angeordnet.

Wie aus Fig. 1 weiterhin ersichtlich ist, ist die Dicke der Wärmeleitplatten 18, 20 größer als eine Tiefe der Längsnut 16. Erst hierdurch kann erreicht werden, dass die der Längsnut 16 gegenüberliegende Oberfläche der Wärmeplatte 18, 20 im wesentlichen eben ausgebildet ist, das heißt, dass sie gegenüber dem Stand der Technik keine Wellung aufweist, weil beispielsweise die Nut für das Rohrregister 14 durchgeprägt ist. Dies erlaubt es, eine gute Wärmekontaktfläche herzustellen und die Wärmeübertragungsleistung zu erhöhen.

Fig. 2 zeigt zwei benachbarte Deckenheizungs- und Kühlungselemente 12 mit Plattenelementen 10, die über eine Verbindungsschiene 28 verbunden sind. Die Deckenheizungs- und Kühlungselemente 12 sind derart zueinander benachbart angeordnet, dass die Anschlussräume 64 der Deckenheizungs- und Kühlungselemente 12 ebenfalls benachbart zueinander angeordnet sind. Die Rohrenden 24 jedes Plattenelements 10 sind jeweils in den Anschlussraum 64 des jeweiligen Deckenheizungs- und Kühlungselements 12 geführt.

Ferner ist aus dem in Fig. 2 dargestellten Ausschnitt ersichtlich, dass Rohrenden 24 des Rohrregisters 14 benachbarter Deckenheizungs- und Kühlungselemente 12 mittels eines Verbindungsschlauches 34 fluidtechnisch gekoppelt sind. Um mechanische Beanspruchungen auf die Rohrenden 24 zu reduzieren, ist jeweils eine Rohrfixierung 32 in Form eines Blechs mit dem Rahmen 42 verbunden. Die Rohrfixierung 32 weist eine nicht bezeichnete Ausnehmung auf, durch die das jeweilige Rohrende 24 geführt ist. Hierdurch ist das Rohrende 24 mechanisch fixiert, so dass Krafteinwirkungen auf das Rohrende 24 abgefangen und auf den Rahmen 42 abgeleitet werden können. Schädliche Beanspruchungen des Plattenelements 10 im Bereich des Rohrendes 24 können somit vermieden werden. Dadurch dass das Plattenelement 10 aus Graphit gebildet ist, weist es eine elektrische Leitfähigkeit auf.

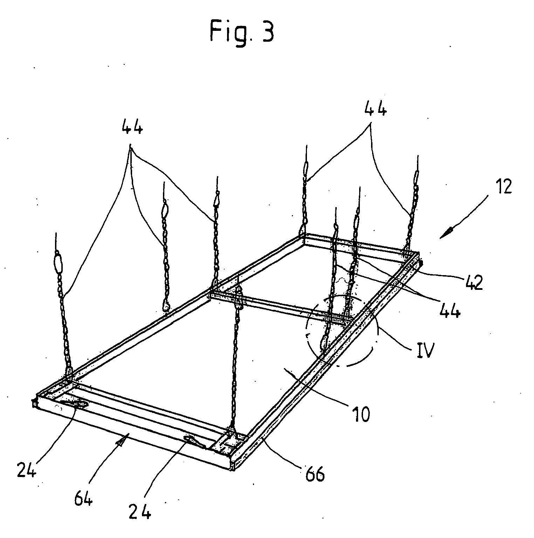

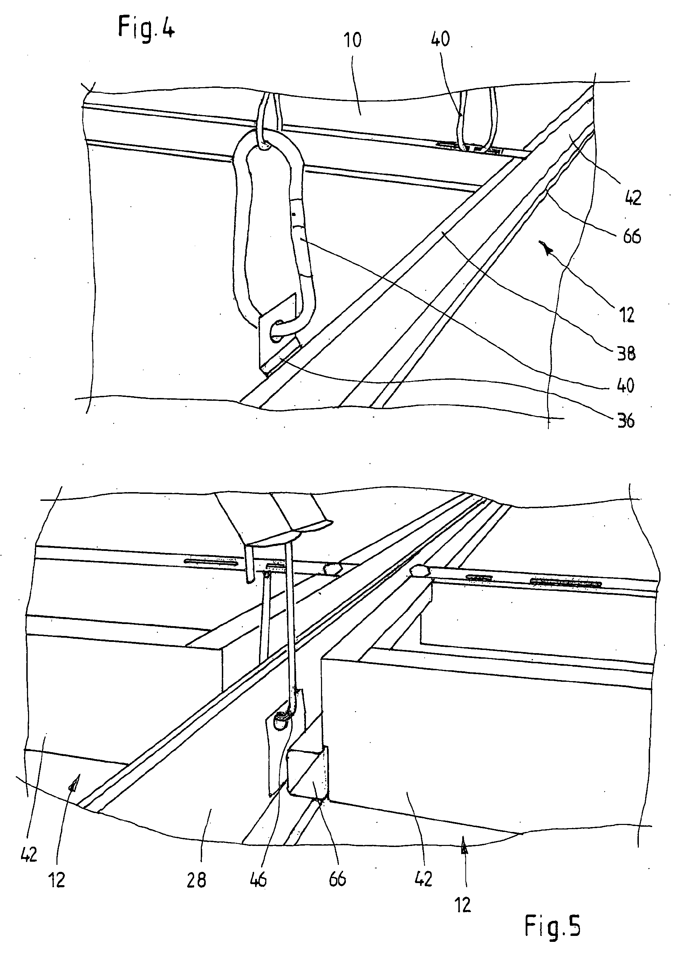

Fig. 3 zeigt beispielhaft, wie das Deckenheizungs- und Kühlungselement 12 aufgehängt werden kann. Hierfür sind Ketten 44 vorgesehen, die mit einer nicht näher dargestellten Decke verbunden sind. An ihren Enden weisen die Ketten 44 Schäkel 40 auf (Fig. 4), die mittels Klemmstücke 36 am Rahmen 42 befestigt werden können. Vorliegend sind die Klemmstücke 36 flexibel an der Abkantung 38 des Rahmens 42 positionierbar. Sie können somit vor Ort an den gewünschten Stellen des Rahmens 42 befestigt werden. Vorliegend sind die Klemmstücke 36 selbstsichernd ausgebildet, so dass nach deren Aufstecken ein Verrutschen oder Lösen der Verbindung mit dem Rahmen 42 weitgehend vermieden ist.

Fig. 5 zeigt einen weiteren perspektivischen Ausschnitt für eine Aufhängung des Deckenheizungs- und Kühlungselements 12, wobei eine Verbindungsschiene 28 vorgesehen ist, die mittels eines Hakens 46 und nicht weiter dargestellter Verbindungsmittel mit der ebenfalls nicht dargestellten Decke verbunden ist. Die Verbindungsschiene 28 ist T-förmig sowie aus einem Stahl ausgebildet. In Längserstreckung des Deckenheizungs- und Kühlungselements 12 weisen die Profile des Rahmens 42 jeweils einen nach außen ragenden Vorsprung 66 auf. Der Vorsprung 66 liegt im montierten Zustand des Deckenheizungs- und Kühlungselements 12 auf der Verbindungsschiene 28 auf. Eine Montage kann daher einfach durch Auflegen der Vorsprünge 66 der Deckenheizungs- und Kühlungselemente 12 auf die Verbindungsschiene 28 erreicht werden, wodurch die Deckenheizungs- und Kühlungselemente 12 somit in ihrer Lage vertikal fixiert sind.

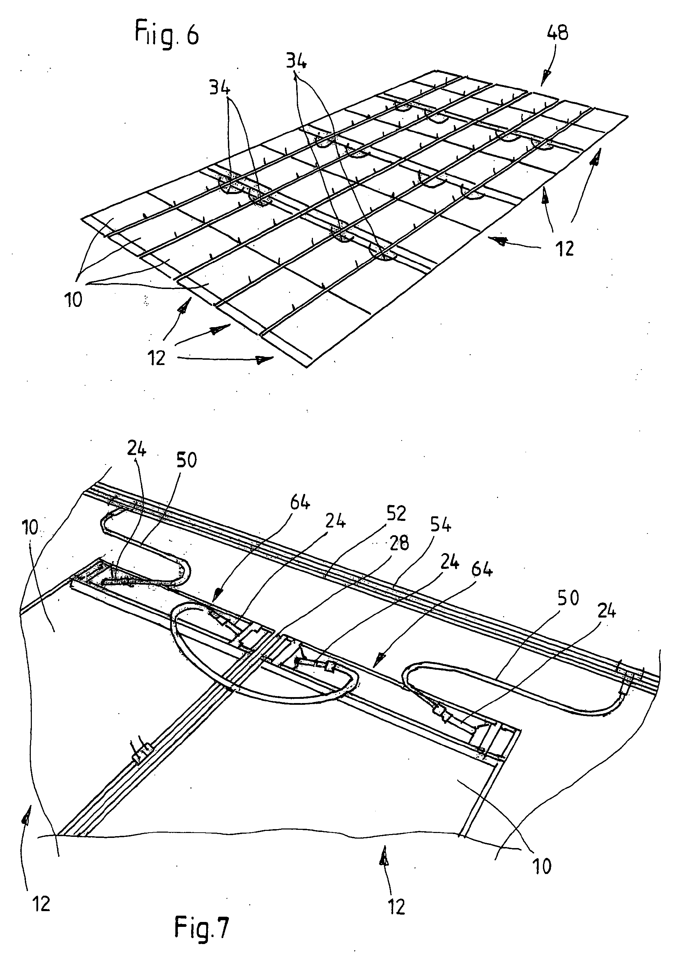

Fig. 6 zeigt in perspektivischer Darstellung ein Deckenfeld 48 mit Deckenheizungs- und Kühlungselementen 12, wie sie anhand der vorhergehenden Fign. 1 bis 5 beschrieben worden sind und die über nicht bezeichnete Verbindungsschienen modular miteinander verbunden sind. Die Aufhängung des Deckenfeldes 48 erfolgt durch Aufhängung der einzelnen Verbindungsschienen, wie es in Fig. 4 gezeigt ist. Ersichtlich ist, dass Plattenelemente 10 benachbarter Deckenheizungs- und Kühlungselemente 12 mittels Verbindungsschläuchen 34 strömungstechnisch verbunden sind.

Fig. 7 zeigt eine Darstellung zweier benachbarter Deckenheizungs- und Kühlungselemente 12, die mittels einer Verbindungsschiene 28 verbunden sind. Dargestellt ist vorliegend der Anschlussbereich des Rohrregisters 14, von dem lediglich die in die Anschlussräume 64 geführten Rohrenden 24 sichtbar sind. Die benachbarten Rohrenden 24 der beiden Deckenheizungs- und Kühlungselemente 12 sind über einen Schlauch 34 miteinander strömungstechnisch gekoppelt. Die beiden außenliegenden Rohrenden 24 sind über Anschlussschläuche 50 mit dem Vorlauf 52 beziehungsweise dem Rücklauf 54 strömungstechnisch verbunden.

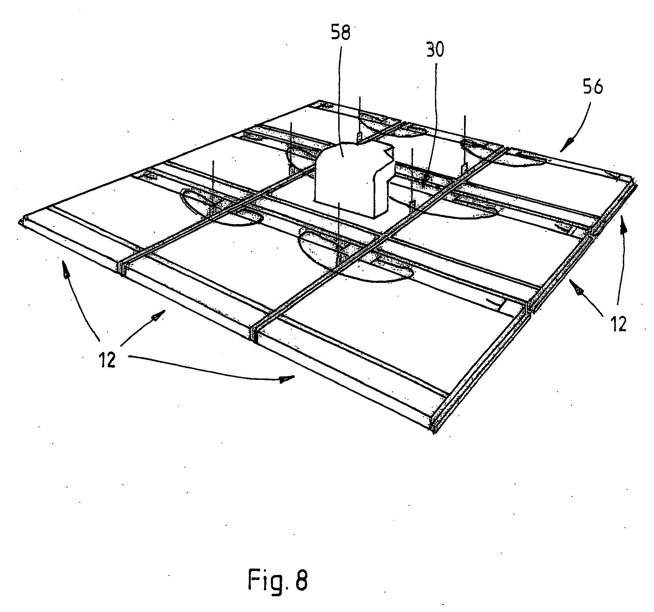

Fig. 8 zeigt eine weitere perspektivische Darstellung eines Deckenfeldes 56, welches aus Deckenheizungs- und Kühlungselementen 12 gebildet ist, die ebenfalls über nicht bezeichnete Verbindungsschienen modular miteinander verbunden sind. Bezüglich der Deckenheizungs- und Kühlungselemente 12 sowie deren Anschluss wird auf die vorherigen Ausführungen verwiesen. Ersichtlich ist, dass das Deckenfeld 56 etwa mittig eine Aussparung 30 aufweist, in die ein Belüftungskanal 58 eingesetzt ist. Dies erlaubt es, die Raumluft bedarfsgerecht zu beeinflussen.

Durch den Aufbau des Plattenelements 10 wird sichergestellt, dass Wärme im Wesentlichen nur an der Unterseite des Deckenheizungs- und Kühlungselements 12 ausgetauscht wird. Durch die Wärmeisolation 60 wird ein deckenseitiger Wärmeaustausch weitgehend unterbunden. Aufgrund des Aufbaus des Plattenelements 10 ist die Reaktionsgeschwindigkeit des Deckenheizungs- und Kühlungselements 12 bei geringem Gewicht deutlich erhöht gegenüber vergleichbaren Elementen des Stands der Technik. Darüber hinaus erweist es sich als Vorteil, dass entgegen den bekannten Deckenheizungs- und Kühlungselementen der Rohrdurchmesser des Rohrs 14 keinen Einfluss auf die Wärmeabgabe beziehungsweise Wärmeaufnahme hat, solange der hierfür benötigte Strom des Wärmetransfermediums, zum Beispiel Wasser, Öl oder dergleichen gewährleistet ist. Dadurch kann der Rohrdurchmesser und somit auch die Dicke des Plattenelements 10 kleingehalten werden. Im vorliegenden Fall erlaubt dies, die Wärmeleitplatten 18, 20 höher zu verdichten, wodurch die Wärmeleiteigenschaften des Plattenelements 10 weiter verbessert werden können.

Das in den Figuren dargestellte Ausführungsbeispiel dient lediglich der Erläuterung der Erfindung und ist für diese nicht beschränkend.

### Bezugszeichenliste

- 10: Plattenelement
- 12: Deckenheizungs- und Kühlungselement
- 14: Rohrregister
- 16: Längsnut
- 18: Wärmeleitplatte
- 20: Wärmeleitplatte
- 22: Wärmeübergangselement
- 24: Rohrende
- 26: Deckenfeld
- 28: Verbindungsschiene
- 30: Aussparung
- 32: Rohrfixierung
- 34: Verbindungsschlauch
- 36: Klemmstück
- 38: Abkantung
- 40: Schäkel
- 42: Rahmen
- 44: Kette
- 46: Haken
- 48: Deckenfeld
- 50: Anschlussschlauch
- 52: Vorlauf
- 54: Rücklauf
- 56: Deckenfeld
- 58: Belüftungskanal
- 60: Wärmeisolation
- 62: Versteifungsprofil
- 64: Anschlussraum
- 66: Vorsprung

## Patentansprüche

1. Deckenheizungs- und/oder Kühlungselement (12) mit einem Plattenelement (10), wobei das Plattenelement (10) ein von einem Wärmetransfermedium durchströmtes Rohr (14) aufweist, wobei das Rohr (14) mit einer Wärmeleitplatte (18) verbunden ist, mit einer zweiten Wärmeleitplatte (20), wobei die Wärmeleitplatten (18, 20) einstückig miteinander verbunden sind und das Rohr (14) zwischen den zwei Wärmeleitplatten (18, 20) unter Materialverdrängung und Verdichtung des Wärmeleitplattenwerkstoffs in einem Bereich um das Rohr (14) eingepresst ist, mit einem Wärmeübergangselement (22), welches mit dem Plattenelement (10) wärmetechnisch gekoppelt ist, mit einem Versteifungsmittel (42), **dadurch gekennzeichnet, dass** ein Rohrende (24) des Rohrs (14) mittels einer Rohrfixierung (32) mechanisch an dem Versteifungsmittel (42) fixiert ist.

2. Deckenheizungs- und/oder Kühlungselement (12), **dadurch gekennzeichnet, dass** das Wärmeübergangselement (22) auf der dem Rohr (14) abgewandten Seite einer Wärmeleitplatte (18, 20) angeordnet ist.

3. Deckenheizungs- und/oder Kühlungselement nach einem der vorangehenden Ansprüche, **dadurch gekennzeichnet, dass** das Wärmeübergangselement (22) zumindest teilweise antibakteriell beschichtet ist.

4. Deckenheizungs- und/oder Kühlungselement nach einem der vorangehenden Ansprüche, **dadurch gekennzeichnet, dass** das Wärmeübergangselement (22) ein schallabsorbierendes Material aufweist.

5. Deckenheizungs- und/oder Kühlungselement nach einem der vorangehenden Ansprüche, **dadurch gekennzeichnet, dass** das Wärmeübergangselement (22) mit dem Plattenelement (10) einstückig ausgebildet ist.

6. Deckenheizungs- und/oder Kühlungselement nach einem der vorangehenden Ansprüche, **dadurch gekennzeichnet, dass** es zumindest teilweise elektrisch leitfähig ist.

7. Decke mit Deckenheizungs- und/oder Kühlungselementen (12) nach einem der vorangehenden Ansprüche, **gekennzeichnet durch** Verbindungsschienen (28), mit denen die Deckenheizungs- und/oder Kühlungselemente (12) zu einem Deckenfeld (26) modular verbunden sind.

8. Decke nach Anspruch 7, **dadurch gekennzeichnet, dass** das Deckenfeld (26, 56) eine Aussparung (30) aufweist.

## Claims

1. A ceiling heating and/or cooling element (12) comprising a plate element (10), wherein the plate element (10) comprises a tube (14) through which flows a heat transfer medium, wherein the tube (14) is connected to a heat conducting plate (18), comprising a second heat conducting plate (20), wherein the heat conducting plates (18, 20) are connected to each other in one piece and the tube (14) is pressed between the two heat conducting plates (18, 20) with material displacement and compression of the heat conducting plate material in an area around the tube (14), comprising a heat transfer element (22) which is thermally coupled to the plate element (10), comprising a stiffening means (42), **characterized in that** one tube end (24) of the tube (14) is mechanically fixed on the stiffening means (42) by means of a tube fixation (32).

2. A ceiling heating and/or cooling element (12), **characterized in that** the heat transfer element (22) is mounted on the side of a heat conducting plate (18, 20), which side is facing away from the tube (14).

3. A ceiling heating and/or cooling element according to one of the preceding claims, **characterized in that** the heat transfer element (22) is at least partially covered by an antibacterial coating.

4. A ceiling heating and/or cooling element according to one of the preceding claims, **characterized in that** the heat transfer element (22) comprises a sound absorbing material.

5. A ceiling heating and/or cooling element according to one of the preceding claims, **characterized in that** the heat transfer element (22) is integrally formed with the plate element (10).

6. A ceiling heating and/or cooling element (12) according to one of the preceding claims, **characterized in that** it is at least partially electrically conductive.

7. A ceiling comprising ceiling heating and/or cooling elements (12) according to one of the preceding claims, **characterized by** connecting rails (28), by means of which the ceiling heating and/or cooling elements (12) are connected on a modular basis to form a ceiling field (26).

8. A ceiling according to claim 7, **characterized in that** the ceiling field (26, 56) comprises a recess (30).

## Revendications

1. Elément de réchauffage et/ou de refroidissement de plafond (12) comprenant un élément de plaque (10), l'élément de plaque (10) comprenant un tube (14) à travers duquel passe un médium de transfert de chaleur, lequel tube (14) étant relié à une plaque conductrice de la chaleur (18), comprenant une deuxième plaque conductrice de la chaleur (20), les plaques conductrices de la chaleur (18, 20) étant reliées l'une à l'autre d'un seul tenant et le tube (14) étant pressé entre les deux plaques conductrices de la chaleur (18, 20) par refoulement de matière et compression du matériau des plaques conductrices de la chaleur dans une zone autour du tube (14), comprenant un élément de transfert de chaleur (22), qui est thermiquement couplé à l'élément de plaque (10), comprenant un moyen de rigidification (42), **caractérisé en ce que** l'une extrémité de tube (24) du tube (14) est fixée mécaniquement sur le moyen de rigidification (42) par moyen d'un élément de fixation de tube.

2. Elément de réchauffage et/ou de refroidissement de plafond (12), **caractérisé en ce que** l'élément de transfert de chaleur (22) est disposé sur le côté d'une plaque conductrice de la chaleur (18, 20), qui est opposé au tube (14).

3. Elément de réchauffage et/ou de refroidissement de plafond (12) selon l'une des revendications précédentes, **caractérisé en ce que** l'élément de transfert de chaleur (22) est au moins partiellement couvert par un revêtement antibactérien.

4. Elément de réchauffage et/ou de refroidissement de plafond (12) selon l'une des revendications précédentes, **caractérisé en ce que** l'élément de transfert de chaleur (22) comprend un matériau absorbant le son.

5. Elément de réchauffage et/ou de refroidissement de plafond (12) selon l'une des revendications précédentes, **caractérisé en ce que** l'élément de transfert de chaleur (22) est formé d'un seul tenant avec l'élément de plaque (10).

6. Elément de réchauffage et/ou de refroidissement de plafond (12) selon l'une des revendications précédentes, **caractérisé en ce qu'**il est au moins partiellement électriquement conducteur.

7. Plafond comprenant des éléments de réchauffage et/ou de refroidissement de plafond (12) selon l'une des revendications précédentes, **caractérisé par** des rails de liaison (28), par moyen desquels les éléments de réchauffage et/ou de refroidissement de plafond (12) sont reliés d'une manière modulaire pour former un champ de plafond (26).

8. Plafond selon la revendication 7, **caractérisé en ce que** le champ de plafond (26, 56) comprend un évidement (30).
